# EUROPÄISCHE PATENTSCHRIFT

(11) **EP 0 545 139 B1**
(45) Veröffentlichungstag und Bekanntmachung des Hinweises auf die Patenterteilung: **10.07.1996**
(21) Anmeldenummer: 92119647.3
(22) Anmeldetag: 18.11.1992
(51) Int. Cl.: A23L 2/38

(54) **Malzgetränk**
Malt drink
Boisson à base de malt

(30) Priorität: 26.11.1991 DE 4138808
(43) Veröffentlichungstag der Anmeldung: 09.06.1993
(73) Patentinhaber: FELDSCHLÖSSCHEN BRAUEREI GmbH, D-46499 Hamminkeln (DE)
(72) Erfinder: Wilhelm Kloppert, Dipl.Braumeister, W-4236 Hamminkeln (DE); Marlene Kloppert-Dreissen, Dipl. - Kaufmann, W-5000 Köln 41 (DE)
(74) Vertreter: Werner, Hans-Karsten, Dr.Dipl.-Chem.

(56) Entgegenhaltungen:
- DE-A- 3 636 721
- FOOD SCIENCE TECHNOLOGY ABSTRACTS AN 82:15414 DN 82-11-H1707 International Food Information Service Berkshire, Reading, GB.

## Beschreibung

Gegenstand der vorliegenden Erfindung ist ein ohne Hefeverwendung hergestelltes Malzgetränk enthaltend einen gegebenenfalls schwach gehopften aber unvergorenen Malzsud mit einer Stammwürze von 2 bis 15 %, der gegebenenfalls Couleur und/oder Farbmalz und bis zu 75 % der Stammwürze aufgeschlossene Stärkezucker bzw. andere Zucker enthält.

Food Science Techn. ABS., AN 82-15414 beschreibt ein bierähnliches Malzgetränk, das zwar wirklich alkoholfrei ist, jedoch mit Hilfe von Hefe hergestellt wurde. Die Hefe wird dem heißen Sud zugefügt, so daß sie ihre Gärfähigkeit verliert und daher keinen Alkohol produzieren kann. Dennoch sind die Inhalts- und Geschmacksstoffe der Hefe in dem fertigen Getränk vorhanden. Der Zusatz von Ascorbinsäure in geringen Mengen erfolgt zur Entfernung von Restsauerstoff, der zu Geschmacksbeeinträchtigungen führen kann.

DE-A-36 36 721 beschreibt ebenfalls ein Verfahren zur Herstellung eines Malztrunkes ohne jeglichen Alkohol, bei dem aber ebenfalls Hefe zur Anwendung kommt. Auch bei diesem Verfahren wird die Hefe heiß zugefügt und einer offenen atmosphärischen Kochung von 20 bis 30 Minuten unterworfen. Bei diesem Verfahren wird der zugesetzten Hefe die Gärfähigkeit genommen, so daß die Bildung von Alkohol mangels einer Gärung nicht eintreten kann; vgl. Spalte 2, Zeilen 24 bis 39. Auch die alternative Möglichkeit, die Hefe vor dem Zusatz zu erhitzen und in die kalte Würze einzugeben, führt zur Inaktivierung der Hefe. Dennoch ist auch dieses Getränk unter Zusatz von Hefe hergestellt worden, so daß die Inhalts- und Geschmacksstoffe der Hefe anwesend sind.

Die erfindungsgemäßen Malzgetränke unterscheiden sich von Malzbier und einem Malztrunk dadurch, daß sie unvergoren sind und deshalb nicht nur alkoholarm, sondern wirklich alkoholfrei sind. Sie sind auch nicht durch Milchsäure erzeugende Mikroorganismen vergoren, so daß sie im allgemeinen geschmacklich und vom pH-Wert her in der Nähe von Malzbier und einem Malztrunk angesiedelt sind. Da diese Malzgetränke unvergoren sind, unterliegen sie nicht mehr dem Reinheitsgebot für Biere, so daß es zulässig ist, Zusätze hinzuzugeben, die Malzbier und einem Malztrunk nicht zugesetzt werden dürfen. Ein Nachteil von Malzgetränken ist, daß sie im Gegensatz zu Malzbier und einem Malztrunk keine wasserlöslichen Vitamine aus der Hefe enthalten.

Die vorliegende Erfindung hat sich die Aufgabe gestellt, ein geschmacklich dem Malzbier und einem Malztrunk ähnliches Malzgetränk zu entwickeln, welches einerseits wirklich alkoholfrei ist, andererseits geschmacklich und bezüglich der wasserlöslichen Wertstoffe große Ähnlichkeit mit Malzbier und einem Malztrunk hat.

Diese Aufgabe wird dadurch gelöst, daß das ohne Hefeverwendung hergestellte Malzgetränk zusätzlich enthält
1,2 bis 8 mg/l Thiamin (Vitamin B₁),
1,5 bis 10 mg/l Riboflavin (Vitamin B₂),
1,8 bis 10 mg/l Pyridoxin (Vitamin B₆),
5,0 bis 30 µg/l Cyanocobalamin (Vitamin B₁₂),
18,0 bis 90 mg/l Nicotinsäureamid (PP).

Diese Vitaminmengen reichen aus, um den Tagesbedarf an Vitaminen der B-Gruppe zu decken. Die unteren Werte kommen in Frage für ein Malzgetränk, das bis zu einem Liter pro Tag getrunken wird. Die oberen Grenzwerte sind geeignet, den Tagesbedarf der Vitamin-B-Gruppe schon mit 0,2 l Malzgetränk zu decken. Vorzugsweise werden Malzgetränke in 0,3 bis 0,5 l-Flaschen abgefüllt, so daß das Malzgetränk
2,4 bis 5,3 mg/l Thiamin,
3,0 bis 6,7 mg/l Riboflavin,
3,6 bis 6,7 mg/l Pyridoxin,
10,0 bis 20,0 µg/l Cyanocobalamin und
36,0 bis 60,0 mg/l Nicotinsäureamid
enthalten.

Da das Reinheitsgebot für die erfindungsgemäßen Malzgetränke nicht mehr gültig ist, ist es durchaus möglich, dem Getränk zusätzlich Calciumhydrogenphosphat und/oder Calciumsalze organischer Genußsäuren zuzusetzen, um dem Körper zusätzlich Calcium zuzuführen. Als organische Genußsäuren kommen insbesondere Milchsäure, Citronensäure und Apfelsäure in Frage, da diese auch in Gegenwart von Kohlensäure und pH-Werten zwischen 4 und 5 das Calcium in Lösung halten.

Schließlich ist es erfindungsgemäß möglich, dem Malzgetränk zusätzlich Ascorbinsäure zuzusetzen, um damit den Bedarf an Vitamin C zumindest teilweise zu decken. Erhöhter Vitamin-C-Bedarf in besonderen Situationen kann durch das Malzgetränk nicht gedeckt werden, da dies den pH-Wert zu stark absenken und den Geschmack zu sehr beeinflussen würde.

Der Stammwürzegehalt des erfindungsgemäß verwendeten Malzsuds liegt zwischen 2 und 15 %. Vorzugsweise liegt er zwischen 11,1 und 13,9 %. Im Rahmen der Anforderungen des Marktes an nährstoffarme Getränke ist es aber auch möglich, die Stammwürze weiter zu senken und ein Malzgetränk "light" herzustellen, dessen Stammwürze bis auf 2 % gesenkt wird. Geschmacklich ansprechend sind derartige Getränke solange sie mindestens 3 bis 5 % Stammwürze enthalten.

Die Herstellung der erfindungsgemäßen Malzgetränke erfolgt zunächst in üblicher Weise, indem üblicherweise ein Malzsud hergestellt wird, der vorzugsweise gegen Ende leicht gehopft wird. Unter einer leichten Hopfung wird verstanden eine Hopfung, bei der 0,5 bis 4 g α-Säure im Fertigprodukt vorhanden sind. Dazu wird die Hopfengabe bei der Kaltwürze entsprechend höher gewählt. 4,1 g α-Säure auf 1 hl Kaltwürze bei 20°C ergibt beispielsweise einen Gehalt von 1,8 g α-Säure im hl-Fertigprodukt. Der Sud wird gewünschtenfalls mit den üblichen Zusätzen, wie Couleur und/oder Farbmalz und bis zu 75 % der Stammwürze aufgeschlossenem Stärkezucker versetzt, homogenisiert und auf 1°C gekühlt. Vorzugsweise wird bereits dieses Gemisch leicht carbonisiert. Nach dem Abkühlen auf 1°C wird filtriert, gegebenenfalls mit isomerisierten Hopfen versetzt und gegebenenfalls erneut carbonisiert. Nach dem Abfüllen wird das Getränk für mindestens 20 Minuten auf mindestens 64°C erhitzt, um es zu pasteurisieren. Die maximale Temperatur von 75°C sollte nicht überschritten werden, da dies zu einem unnötigen Abbau der Vitamine und darüber hinaus bei CO₂-haltigen Getränken zu Schwierigkeiten bei der Flaschenabfüllung führt.

Die Verkostung eines erfindungsgemäß hergestellten Malzgetränks hat ergeben, daß dieses trotz der erfindungsgemäßen Zusätze geschmacklich voll akzeptiert wird, die ernährungsphysiologisch geforderten Mengen des Vitamin-B-Komplexes enthält und absolut alkoholfrei ist. Es handelt sich somit um ein Produkt, das den heutigen Anforderungen an ein derartiges Getränk voll erfüllt. Es ist darüber hinaus ausreichend lagerfähig, so daß es auch den Anforderungen des Vertriebs und des Handels genügt.

Die Zugabe der Vitamine erfolgt vorzugsweise in Form einer wäßrigen Lösung vor dem Homogenisieren des kalten Sudes. Es ist zwar prinzipiell möglich, die Vitamine, mit Ausnahme des Vitamin B₂, in Form von Pulver einzurühren, jedoch erfordert dies erhöhten Aufwand bei der Homogenisierung. Sicherer und zuverlässiger erfolgt die gleichmäßige Verteilung, wenn das gesamte Vitamingemisch in Form einer warmen wäßrigen Lösung zubereitet und zudosiert wird.

Auch der Zusatz von Calciumsalzen und/oder Ascorbinsäure erfolgt vorzugsweise vor der Homogenisierung und vor allem vor der Kühlung, so daß etwaige Trübungen und Niederschläge durch Zusatz dieser Komponenten bei der Filtration entfernt werden und damit gewährleistet wird, daß das fertige Malzgetränk ungetrübt abgefüllt und dem Verbraucher angeboten werden kann.

## Patentansprüche

1. Ohne Hefeverwendung hergestelltes Malzgetränk enthaltend einen gegebenenfalls schwach gehopften aber unvergorenen Malzsud mit einer Stammwürze von 2 bis 15 %, der gegebenenfalls Couleur und/oder Farbmalz und bis zu 75 % der Stammwürze aufgeschlossene Stärkezucker enthält, dadurch gekennzeichnet, daß es folgende Zusätze enthält
1,2 bis 8 mg/l Thiamin (Vitamin B₁),
1,5 bis 10 mg/l Riboflavin (Vitamin B₂),
1,8 bis 10 mg/l Pyridoxin (Vitamin B₆),
5,0 bis 30 µg/l Cyanocobalamin (Vitamin B₁₂),
18,0 bis 90 mg/l Nicotinsäureamid (PP).

2. Malzgetränk gemäß Anspruch 1, dadurch gekennzeichnet, daß es zusätzlich Calciumhydrogenphosphat und/oder Calciumsalze organischer Genußsäuren enthält.

3. Malzgetränk gemäß Anspruch 1 oder 2, dadurch gekennzeichnet, daß es zusätzlich Ascorbinsäure enthält.

## Claims

1. A malt drink prepared without using yeast which contains an optionally slightly hopped, but unfermented malt decoction having an original wort content of from 2 to 15% and optionally containing colouring and/or coloured malt and up to 75% of the original wort of digested starch sugars, characterized by containing the following supplements:
from 1.2 to 8 mg/l of thiamin (vitamin B₁);
from 1.5 to 10 mg/l of riboflavin (vitamin B₂);
from 1.8 to 10 mg/l of pyridoxine (vitamin B₆);
from 5.0 to 30 µg/l of cyanocobalamine (vitamin B₁₂);
from 18.0 to 90 mg/l of nicotinamide (PP).

2. The malt drink according to claim 1, characterized by additionally containing calcium hydrogenphosphate and/or calcium salts of physiologically acceptable organic acids.

3. The malt drink according to claim 1 or 2, characterized by additionally containing ascorbic acid.

## Revendications

1. Boisson maltée obtenue sans utilisation de levure, contenant une préparation de malt éventuellement légèrement enrichie en houblon, mais non fermentée, avec une teneur en moût original de 2 à 15 %, contenant éventuellement un agent de coloration et/ou du malt torréfié, et du dextrose à raison de jusqu'à 75 % de la teneur en moût original,
caractérisée en ce qu'elle contient les additifs suivants :
1,2 à 8 mg/l de Thiamine (Vitamine B₁)
1,5 à 10 mg/l de Riboflavine (Vitamine B₂)
1,8 à 10 mg/l de Pyridoxine (Vitamine B₆)
5,0 à 30 µg/l de Cyanocobalamine (Vitamine B₁₂)
18,0 à 90 mg/l d'Amide de l'acide nicotinique (PP).

2. Boisson maltée selon la revendication 1, caractérisée en ce qu'elle contient en outre un phosphate de calcium-hydrogène et/ou des sels de calcium d'acides organiques alimentaires.

3. Boisson maltée selon la revendication 1 ou 2, caractérisée en ce qu'elle contient en outre de l'acide ascorbique.
